# FASCICULE DE BREVET EUROPEEN

(11) **EP 1 929 857 B1**
(45) Date de publication et mention de la délivrance du brevet: **20.01.2010**
(21) Numéro de dépôt: 07120751.8
(22) Date de dépôt: 15.11.2007
(51) Int. Cl.: A01D 78/10

(54) **Machine de fenaison avec des moyens de protection**
Heuwerbungsmaschine mit Schutzmitteln
Haymaking machine with protection means

(30) Priorité: 27.11.2006 FR 0655115
(43) Date de publication de la demande: 11.06.2008
(73) Titulaire: KUHN S.A., 67700 Saverne (FR)
(72) Inventeur: Quirin, Michel, 67310, Allenwiller (FR); Klein, Gilbert, 67330, Neuwiller-les-Saverne (FR)
(74) Mandataire: Andres, Jean-Claude

(56) Documents cités:
- DE-A1- 1 482 174
- DE-A1- 1 757 033
- FR-A1- 2 719 742
- NL-A- 7 602 145

## Description

La présente invention se rapporte à une machine de fenaison avec un bâti portant un ou plusieurs rotors comportant chacun un moyeu rotatif autour d'un axe central et qui est muni de bras avec une extrémité intérieure qui est reliée audit moyeu et une extrémité extérieure qui est éloignée de ce dernier et qui porte au moins un outil de travail possédant deux brins reliés par une partie présentant des spires formant des boucles et une section coudée servant à la fixation, au moyen d'un boulon, sur l'extrémité extérieure du bras correspondant, laquelle extrémité est engagée dans les boucles formées par les spires au moins jusqu'à ladite section coudée et lesquelles spires sont couvertes au moyen d'un capot de protection.

Une machine de ce type est connue dans la demande de brevet DE 1 482 174. Sur cette machine, les capots de protection évitent que les spires viennent en contact avec le fourrage déplacé par les brins durant le travail. On évite ainsi que du fourrage reste accroché aux spires et s'introduit entre elles, ce qui nuirait à la souplesse qui permet aux brins de suivre les dénivellations du sol.

Toutefois, lorsqu'un outil de travail rencontre un gros obstacle tel qu'une borne, les spires proches du brin extérieur qui est le plus sollicité subissent d'importantes déformations pouvant entraîner une rupture à leur niveau. Dans ce cas, les spires situées au-delà du point de rupture et le brin extérieur correspondant se détachent du bras. Un tel brin est dangereux s'il est projeté en l'air. De plus, il peut se perdre dans le fourrage et provoquer des dégâts considérables s'il venait à passer dans une presse ou une ensileuse utilisée pour la récolte.

La présente invention a pour but de remédier à cet inconvénient. Elle doit notamment éviter d'une manière simple la projection et la perte d'une telle partie d'un outil de travail cassé, tout en conservant une protection correcte des spires de ces outils de travail.

A cet effet, une importante caractéristique de l'invention consiste en ce que le capot de protection comporte une patte frontale qui passe sur le côté extérieur des spires et s'étend à l'intérieur des boucles formées par lesdites spires au moins jusqu'à l'extrémité extérieure du bras porte-outil correspondant.

De cette manière, en cas de rupture, les spires et le brin correspondant sont retenus par la patte frontale du capot de protection. Ces éléments restent ainsi accrochés au bras correspondant, ce qui évite leur projection ou perte dans le fourrage.

La patte frontale peut avantageusement être utilisée pour la fixation du capot de protection lui-même sur l'extrémité du bras correspondant.

Selon une autre caractéristique de l'invention, le capot de protection et sa patte frontale forment avec l'extrémité extérieure du bras correspondant une boucle fermée à travers laquelle passent les spires. Grâce à cette boucle fermée il n'y a aucun passage par lequel une spire détachée des autres spires pourrait s'échapper. Ces spires sont ainsi retenues d'une manière certaine sur l'extrémité du bras correspondant.

Selon une autre caractéristique de l'invention le capot de protection comporte sur son côté orienté vers le centre du rotor un moyen de positionnement par rapport au bras sur lequel il est fixé. Ce moyen de positionnement peut avantageusement être constitué par un ergot qui est engagé dans un orifice prévu sur ledit bras. Cet agencement stabilise la position du capot par rapport aux spires, même en cas de chocs dus à la rupture d'un brin de l'outil de travail correspondant.

D'autres caractéristiques et avantages ressortiront de la description qui va suivre et qui se réfère aux dessins annexés qui représentent, à titre d'exemple non limitatif, une forme de réalisation de la machine selon l'invention.

Dans ces dessins :
- la figure 1 représente une vue de dessus d'une machine selon l'invention,
- la figure 2 représente, à plus grande échelle, une vue de dessus d'un bras avec un outil de travail,
- la figure 3 représente en coupe le bras et l'outil de travail de la figure 2.

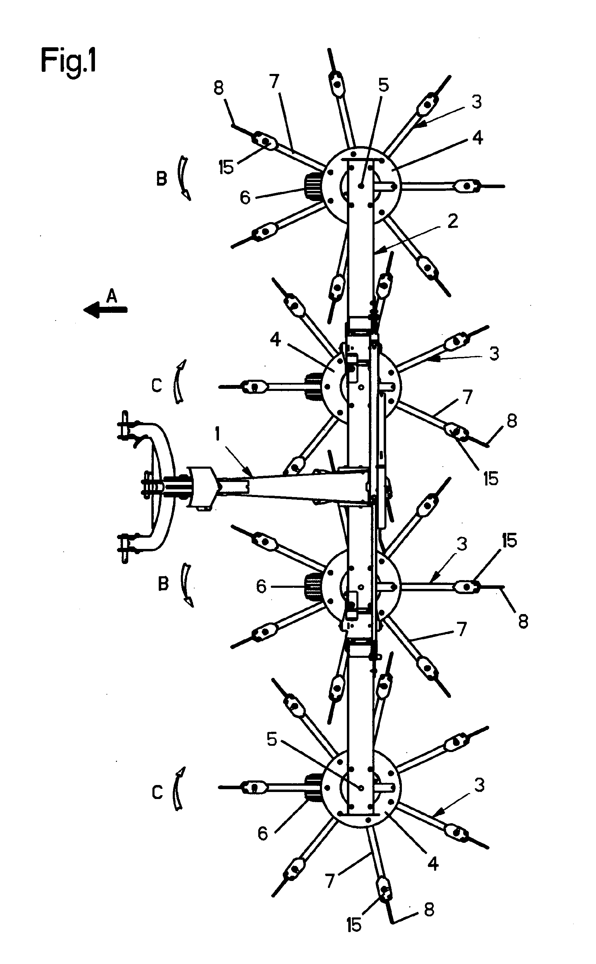

Telle qu'elle est représentée sur la figure 1, la machine de fenaison selon l'invention est une faneuse de fourrage étalé sur le sol. Elle possède un bâti (1) pouvant être accouplé à un tracteur servant à l'animer et à la déplacer dans une direction d'avancement (A). Ce bâti (1) comporte une partie transversale (2) qui porte plusieurs rotors de fanage (3) pouvant être entraînés en rotation dans des sens (B et C) de manière à tourner deux à deux en convergence à l'avant durant le travail.

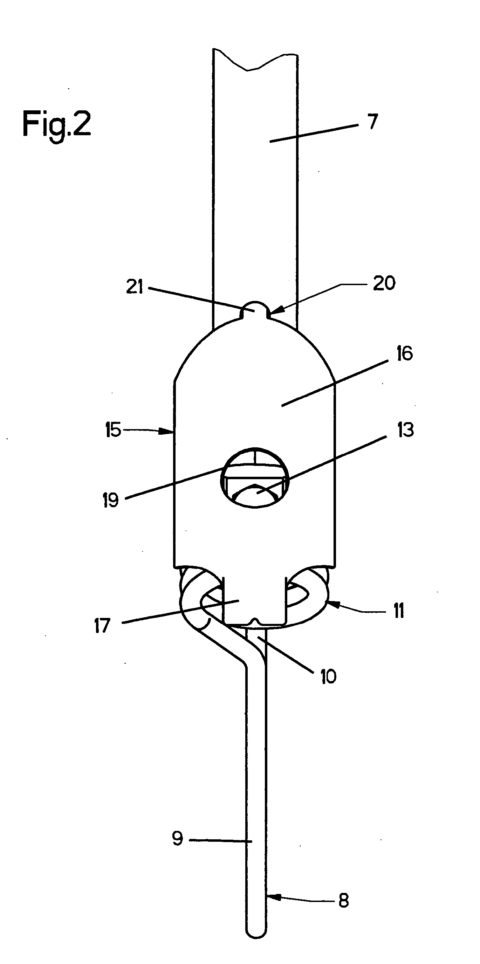

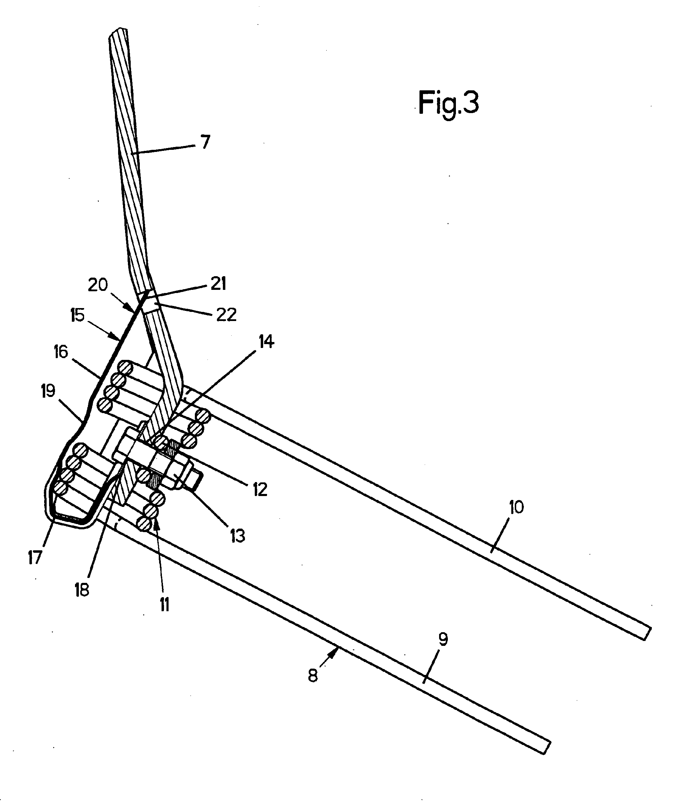

Chaque rotor de fanage (3) comporte un moyeu (4) monté rotatif sur un axe central (5) qui est relié au bâti (1). Cet axe (5) est sensiblement vertical ou incliné dans la direction d'avancement (A). La partie supérieure de chaque axe (5) constitue l'axe de rotation du rotor (3) correspondant, tandis que sa partie inférieure porte une roue (6) qui prend appui sur le sol dans la position de travail. Chaque moyeu (4) est muni de bras (7) qui s'étendent en forme de rayons. Chacun de ces bras (7) présente une extrémité intérieure avec laquelle il est relié audit moyeu (4) et une extrémité extérieure qui est éloignée de ce dernier et qui porte au moins un outil de travail (8) en forme de fourche. Comme cela ressort des figures 2 et 3, chaque outil (8) possède deux brins (9 et 10) qui sont dirigés vers le sol et qui sont reliés par une partie présentant des spires (11) formant des boucles et une section coudée (12) servant à la fixation, au moyen d'un boulon (13), sur l'extrémité extérieure du bras (7) correspondant. Ladite extrémité extérieure est engagée dans les boucles formées par les spires (11) au moins jusqu'à ladite section coudée (12) et comporte un orifice (14) pour le passage du boulon (13).

Chaque bras porte-outil (7) comporte un capot de protection (15) avec une partie galbée (16) qui couvre les spires (11) de l'outil de travail (8) correspondant. Ce capot (15) comporte une patte frontale (17) qui s'étend vers l'extérieur dans le prolongement de la partie galbée (16). Cette patte (17) passe ensuite sur le côté extérieur des spires (11) et s'étend à l'intérieur des boucles formées par lesdites spires (11) au moins jusqu'au voisinage de l'extrémité extérieure du bras porte-outil (7) correspondant. Cette patte frontale (17) est avantageusement fixée sur ladite extrémité extérieure du bras porte-outil (7) et assure ainsi le positionnement du capot (15) sur le bras (7). Cette fixation est par exemple réalisée au moyen du boulon (13) qui sert également à fixer l'outil de travail (8) correspondant sur le bras (7). Pour cela, la patte (17) comporte un orifice (18) par lequel passe ledit boulon (13). Le capot de protection (15) comporte lui-même un orifice (19) d'un diamètre supérieur à celui de la tête de boulon (13) afin de permettre le passage de ce dernier lors du montage.

Il ressort de la figure 3 que le capot de protection (15) et la patte frontale (17) forment avec l'extrémité du bras (7) correspondant une boucle fermée à travers laquelle passent les spires (11) des outils (8). Ledit capot (15) et sa patte (17) forment respectivement le côté supérieur et le côté extérieur de la boucle tandis que le bras porte-outil (7) forme son côté inférieur et son côté intérieur.

Le capot de protection (15) comporte sur con côté qui est orienté vers l'intérieur, c'est-à-dire vers le centre du rotor (3) correspondant, un moyen de positionnement (20) par rapport au bras (7) correspondant. Dans l'exemple représenté, ce moyen de positionnement (20) est constitué par un ergot (21) qui est engagé dans un orifice (22) dudit bras (7). Ledit ergot (21) est quasiment bloqué dans cet orifice (22), ce qui a pour effet d'immobilier l'ensemble du capot (15) dans sa position par rapport au bras (7) et par conséquent par rapport aux spires (11) de l'outil de travail (8) correspondant.

L'invention concerne aussi le capot de protection (15) présentant une partie galbée (16) avec une patte frontale (17) ayant un orifice (18) de fixation sur un bras porte-outil (7) et, un moyen de positionnement (20) tel qu'un ergot (21) pour son positionnement par rapport audit bras (7).

Durant le travail, la machine est déplacée dans la direction (A) et les rotors (3) sont entraînés en rotation dans les sens (B et C). Leurs outils (8) ramassent sur les parties avant de leurs trajectoires les produits tels que des végétaux couchés sur le sol et étalent à nouveau ces produits à l'arrière, tout en provoquant leur retournement, afin d'accélérer leur séchage. Les capots de protection (15) empêchent que lesdits produits déplacés ne s'accrochent aux spires (11) et altèrent la qualité du travail.

De plus, en cas de rupture au niveau des spires (11), par exemple à la suite de la rencontre avec un obstacle, le brin (9 ou 10) détaché est retenu notamment par la patte frontale (17) et ne peut d'aucune façon se détacher du bras (7) correspondant. La sécurité des personnes et des machines est ainsi assurée.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de fenaison avec un bâti (1) portant un ou plusieurs rotors (3) comportant chacun un moyeu (4) rotatif autour d'un axe central (5) et qui est muni de bras (7) avec une extrémité intérieure reliée audit moyeu (4) et une extrémité extérieure qui est éloignée de ce dernier et qui porte au moins un outil de travail (8) possédant des brins (9 et 10) reliés par une partie présentant des spires (11) formant des boucles et une section coudée (12) servant à la fixation, au moyen d'un boulon (13), sur l'extrémité extérieure du bras (7) correspondant, laquelle extrémité est engagée dans les boucles formées par les spires (11) au moins jusqu'à ladite section coudée (12) et lesquelles spires (11) sont couvertes au moyen d'un capot de protection (15), ***caractérisée par le fait que*** le capot de protection (15) comporte une patte frontale (17) qui passe sur le côté extérieur des spires (11) et s'étend à l'intérieur des boucles formées par les spires (11) au moins jusqu'à l'extrémité extérieure du bras porte-outil (7) correspondant.

2. Machine selon la revendication 1, ***caractérisée par le fait* que** la patte frontale (17) est fixée sur l'extrémité extérieure du bras (7) correspondant.

3. Machine selon la revendication 2, ***caractérisée par le fait* que** la patte frontale (17) du capot de protection (15) est fixée sur l'extrémité du bras (7) correspondant au moyen du boulon de fixation (13) de l'outil de travail (8).

4. Machine selon la revendication 3, ***caractérisée par le fait* que** le capot de protection (15) possède un orifice (19) pour le passage du boulon de fixation (13).

5. Machine selon la revendication 1 ou 2, ***caractérisée par le fait* que** le capot de protection (15) et sa patte frontale (17) forment avec l'extrémité du bras (7) correspondant une boucle fermée à travers laquelle passent les spires (11) de l'outil de travail (8).

6. Machine selon la revendication 5, ***caractérisée par le fait* que** le capot de protection (15) comporte sur son côté orienté vers le centre du rotor (3) correspondant un moyen de positionnement (20) par rapport au bras (7) correspondant.

7. Machine selon la revendication 6, ***caractérisée par le fait* que** le moyen de positionnement (20) est constitué par un ergot (21) qui est engagé dans un orifice (22) du bras (7) correspondant.

8. Capot de protection pour machine de fenaison selon la revendication 1, ***caractérisé par le fait* qu'**il se compose d'une partie galbée (16) possédant une patte frontale (17) qui s'étend vers l'extérieur dans le prolongement de la partie galbée (16) et qui est agencée pour s'étendre au moins jusqu'au voisinage de l'extrémité extérieure d'un bras porte-outil (7) de ladite machine de fenaison de manière à former une boucle avec cette exterémité extérieure, laquelle patte frontale (17) comporte un orifice (18) de fixation sur ledit bras porte-outil (7), ladite partie galbée (16) possédant en sus un moyen de positionnement (20) tel qu'un ergot (21 ) pour le positionnement par rapport audit bras (7).

## Claims

1. Haymaking machine with a frame (1) supporting one or more rotors (3) each comprising a hub (4) that rotates about a central axis (5) and which is provided with arms (7) with an inner end connected to the said hub (4) and an outer end that is distant from the latter and that supports at least one working tool (8) having tines (9 and 10) connected via a portion having turns (11) forming loops and a bent section (12) used for the attachment, by means of a bolt (13), to the outer end of the corresponding arm (7), which end is engaged in the loops formed by the turns (11) at least up to the said bent section (12) and which turns (11) are covered by means of a protective cap (15), ***characterized in* that** the protective cap (15) comprises a frontal lug (17) which passes on the outer side of the turns (11) and extends to the inside of the loops formed by the turns (11) at least up to the outer end of the corresponding tool-carrier arm (7).

2. Machine according to Claim 1, ***characterized in* that** the frontal lug (17) is attached to the outer end of the corresponding arm (7).

3. Machine according to Claim 2, ***characterized in* that** the frontal lug (17) of the protective cap (15) is attached to the end of the corresponding arm (7) by means of the bolt (13) for fastening the working tool (8).

4. Machine according to Claim 3, ***characterized in* that** the protective cap (15) has an orifice (19) for the fastening bolt (13) to pass through.

5. Machine according to Claim 1 or 2, ***characterized in* that** the protective cap (15) and its frontal lug (17) form, with the end of the corresponding arm (7), a closed loop through which the turns (11) of the working tool (8) pass.

6. Machine according to Claim 5, ***characterized in* that** the protective cap (15) comprises, on its side oriented towards the centre of the corresponding rotor (3), a means (20) for positioning relative to the corresponding arm (7).

7. Machine according to Claim 6, ***characterized in* that** the positioning means (20) consists of a stub (21) which is engaged in an orifice (22) of the corresponding arm (7).

8. Protective cap for haymaking machine according to Claim 1, ***characterized* in that** it consists of a curved portion (16) having a frontal lug (17) which extends outwards in the extension of the curved portion (16) and which is arranged in order to extend at least up to the vicinity of the outer end of a tool-carrier arm (7) of the said haymaking machine so as to form a loop with this outer end, which frontal lug (17) comprises an orifice (18) for fastening to the said tool-carrier arm (7), the said curved portion (16) also having a positioning means (20) such as a stub (21) for positioning relative to the said arm (7).

## Patentansprüche

1. Heuwerbungsmaschine mit einem Rahmen (1), der einen oder mehrere Rotoren (3) trägt, die jeweils eine Nabe (4) aufweisen, die um eine zentrale Achse (5) dreht, und die mit Armen (7) mit einem Innenende, das mit der Nabe (4) verbunden ist, und einem Außenende, das von dieser Letzteren entfernt ist, verbunden ist und mindestens ein Arbeitswerkzeug (8) trägt, das Zinken (9 und 10) besitzt, die durch einen Teil verbunden sind, der Windungen (11) aufweist, die Schleifen bilden, und mit einem abgewinkelten Abschnitt (12), der zum Befestigen mittels eines Bolzens (13) auf dem Außenende des entsprechenden Arms (7) dient, versehen ist, wobei das Ende in die von den Windungen (11) gebildeten Schleifen mindestens bis zu dem abgewinkelten Abschnitt (12) eingeführt ist, und wobei die Windungen (11) mittels einer Schutzhaube (15) abgedeckt sind, ***dadurch gekennzeichnet,* dass** die Schutzhaube (15) eine vordere Befestigungschelle (17) aufweist, die auf der Außenseite der Windungen (11) verläuft und sich im Inneren der von den Windungen (11) gebildeten Schleifen mindestens bis zu dem Außenende des entsprechenden Werkzeugträgerarms (7) erstreckt.

2. Maschine nach Anspruch 1, ***dadurch gekennzeichnet,* dass** die vordere Befestigungschelle (17) auf dem Außenende des entsprechenden Arms (7) befestigt ist.

3. Maschine nach Anspruch 2, ***dadurch gekennzeichnet,* dass** die vordere Befestigungschelle (17) der Schutzhaube (15) an dem Ende des entsprechenden Arms (7) mittels des Befestigungsbolzens (13) des Arbeitswerkzeugs (8) befestigt ist.

4. Maschine nach Anspruch 3, ***dadurch gekennzeichnet,* dass** die Schutzhaube (15) eine Öffnung (19) für das Durchgehen des Befestigungsbolzens (13) besitzt.

5. Maschine nach Anspruch 1 oder 2, ***dadurch gekennzeichnet,* dass** die Schutzhaube (15) und ihre vordere Befestigungschelle (17) mit dem Ende des entsprechenden Arms (7) eine geschlossene Schleife bilden, durch die die Windungen (11) des Arbeitswerkzeugs (8) durchgehen.

6. Maschine nach Anspruch 5, ***dadurch gekennzeichnet,* dass** die Schutzhaube (15) auf ihrer zu der Mitte des entsprechenden Rotors (3) gerichteten Seite ein Mittel (20) zum Positionieren in Bezug auf den entsprechenden Arm (7) aufweist.

7. Maschine nach Anspruch 6, ***dadurch gekennzeichnet,* dass** das Positionierungsmittel (20) aus einem Dorn (21) besteht, der in eine Öffnung (22) des entsprechenden Arms (7) eingefügt ist.

8. Schutzhaube für Heuwerbungsmaschine nach Anspruch 1, ***dadurch gekennzeichnet,* dass** sie aus einem gewölbten Teil (16) besteht, der eine vordere Befestigungschelle (17) besitzt, die sich in der Verlängerung des gewölbten Teils (16) nach außen erstreckt und eingerichtet ist, um sich mindestens bis in die Nähe des Außenendes eines Werkzeugträgerarms (7) der Heuwerbungsmaschine derart zu erstrecken, dass die Schelle mit diesem Außenende eine Schleife bildet, wobei die vordere Befestigungschelle (17) eine Öffnung (18) zum Befestigen auf dem Werkzeugträgerarm (7) aufweist, wobei der gewölbte Teil (16) zusätzlich ein Positionierungsmittel (20), wie zum Beispiel einen Dorn (21), zum Positionieren in Bezug zu dem Arm (7) aufweist.
